# EUROPEAN PATENT APPLICATION

(11) **EP 2 025 231 A1**
(43) Date of publication of application: **18.02.2009**
(21) Application number: 08153263.2
(22) Date of filing: 26.03.2008
(51) Int. Cl.: A21C 15/04

(54) **Machine for producing foodstuffs**

(30) Priority: 03.08.2007 IT BO20070562
(71) Applicant: Machinery Innovation Engineering Manufacturing S.r.l., 41051 Castelnuovo Rangone (MO) (IT)
(72) Inventor: Cavilli, Gianfranco, 41057 S. Vito di Spilamberto (Modena) (IT)
(74) Representative: Lanzoni, Luciano

(57) **Abstract**

A machine for producing portions (2) of foodstuff starting with pieces (5) of foodstuff which can be obtained from a whole foodstuff (6), comprises a table (7) for supporting one of the pieces (5), means for feeding pieces (5) one after another to the table (7) and a cutting head (10) which can move vertically between a raised non-operating position in which the head (10) is disengaged from the piece (5) and a lowered operating position in which the head (10) engages with the piece (5), in such a way as to produce a plurality of portions (2) of foodstuff from each piece (5).

## Description

The present invention relates to a machine for processing foodstuffs.

In particular, the present invention relates to a machine for cutting foodstuffs into homogeneous parts having predetermined thickness and size.

This description refers to whole Parmigiano Reggiano® (Parmesan) cheeses as a foodstuff used in the machine, without thereby restricting the scope of the invention.

Whole Parmigiano Reggiano® cheeses have a substantially cylindrical shape with convex lateral walls and are surrounded on the outside by a rind which allows them to be preserved.

As is known, machines for cutting whole Parmigiano Reggiano® cheese into homogeneous parts usually comprise a first unit designed to remove the outer rind from each whole cheese, a second unit in which the whole cheese is cut in such a way that it substantially adopts the shape of a parallelepiped, and a third unit in which the parallelepiped shape is divided, by suitable cutting means, into a plurality of homogeneous cubes.

The homogeneous cubes fed out of the third unit are then vacuum-packed.

Such machines have several disadvantages.

First, a significant amount of Parmigiano® is wasted, especially in the second unit in which the whole Parmigiano® cheese is made into a parallelepiped shape.

All of the material removed in this zone is thrown away, since it is not thick enough to make the above-mentioned cubes.

It has also been found that because of their shape and size such cubes are not easy for consumers to chew, especially for the elderly and children.

The present invention therefore has for an aim to provide a machine for processing and cutting foodstuffs, in particular whole cheeses, which is free of the above-mentioned disadvantages and which at the same time is economical, guarantees a low foodstuff waste coefficient and produces portions of foodstuff that are easily usable by all categories of consumers.

The technical features of the present invention, in accordance with the above aim, are clear from the content of the claims herein, in particular claim 1 and, preferably, from any of the claims directly or indirectly dependent on claim 1.

The advantages of the present invention are more apparent in the detailed description which follows, with reference to the accompanying drawings which illustrate a preferred, non-limiting embodiment of the invention, in which:
- Figure 1 is a schematic perspective view with some parts cut away to better illustrate others, of a machine for producing portions of foodstuffs in accordance with the present invention;
- Figure 2a is a schematic perspective view of a whole cheese;
- Figure 2b is a schematic perspective view of disks of cheese used in the machine in accordance with the present invention;
- Figure 2c is a schematic perspective view of portions of cheese produced in the machine in accordance with the present invention;
- Figure 3 is a bottom plan view of a detail of the machine of Figure 1;
- Figure 4 is a cross-section according to line IV - IV from Figure 3;
- Figure 5 is a schematic perspective view with some parts exploded, of a second embodiment of the detail from Figure 3;
- Figure 6 is a side view of the machine of Figure 1;
- Figure 7 is a side view, partly in cross-section, of a second embodiment of the machine of Figure 1;
- Figure 8 is a schematic perspective view with some parts transparent of a detail of the machine from Figure 7;
- Figure 9 is a bottom plan view of the detail from Figure 8;
- Figure 10 is a perspective view with some parts exploded of the detail from Figures 8 and 9;
- Figure 11 is a schematic perspective view of the machine of Figure 7;
- Figure 12 is a schematic perspective side elevation view of a third embodiment of the machine in accordance with the present invention.

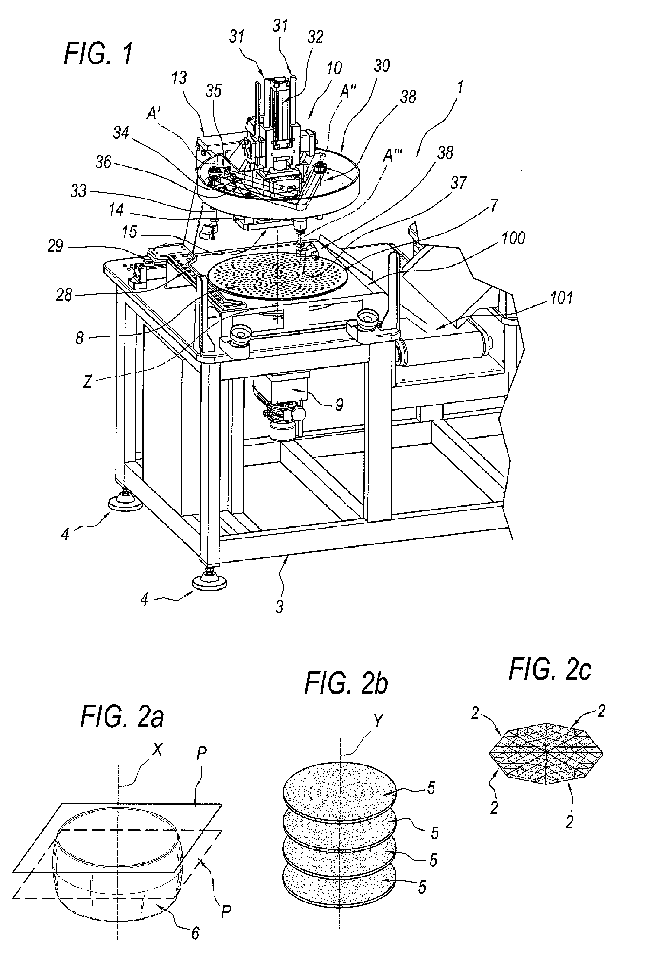

With reference to Figure 1, the numeral 1 denotes as a whole a machine for producing portions 2 of foodstuffs.

In the following description reference is made to cheese as a foodstuff used in the machine, but what is said applies for any type of foodstuff, such as Bologna sausage, meat, etc.

Moreover, in the description below reference is made to a configuration with a single machine, but what is said can be immediately extended to a configuration with two machines operating parallel with each other.

In Figure 1, for simplicity, a second machine operating parallel with and in an identical way to the first machine is omitted.

The machine 1 is supported by a stainless steel base 3 with four height-adjustable feet 4 (of which only two are illustrated) resting on the ground.

The machine 1 comprises cutting means, not illustrated, designed to produce pieces 5 of cheese having predetermined thickness from a whole cheese 6 (hereinafter in the description reference is made to whole Parmigiano Reggiano® - Parmesan - cheeses without thereby restricting the scope of the invention).

More specifically, the cutting means, which may be automatic or manual, are designed to cut a whole Parmigiano Reggiano® cheese 6 (illustrated in Figure 2) which has a substantially cylindrical shape extending along an axis X, into a succession of disks 5 without rind, forming the pieces 5, and having an axis Y coinciding with the axis X of the whole cheese 6.

The cutting means cut the whole cheese 6 according to planes P which are parallel with each other and transversal to the axis X of extension of the whole Parmigiano® cheese 6, in such a way as to create the disks 5.

Advantageously, the thickness of the disks 5 varies between 3 and 8 millimetres.

The machine 1 also comprises a supporting table 7 for the disks 5 and means for feeding the disks 5 onto the supporting table 7 one after another.

In the machine in Figure 1 the feed means, not illustrated, are manual, that is to say, an operator positions one disk 5 of cheese at a time on the table 7.

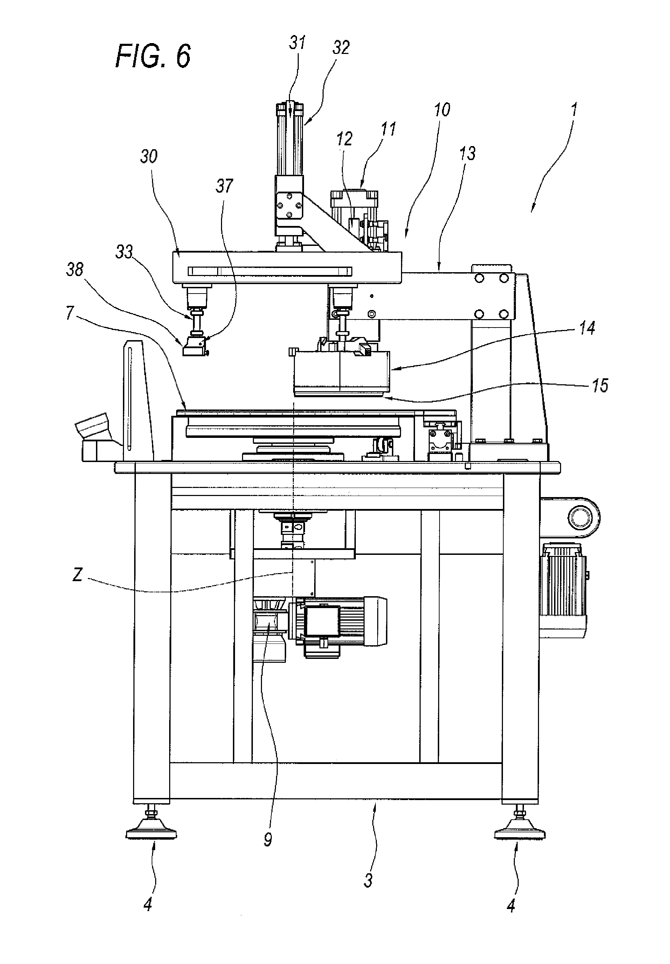

According to the embodiment illustrated in Figures 1 and 6, the supporting table 7 is circular and has a plurality of holes 8 on its surface, whose function is described in detail below.

The supporting table 7 is connected to an electric motor 9 by a mechanical connection in such a way that it can rotate intermittently about its own axis Z when driven by the electric motor 9.

The machine 1 also comprises a cutting head 10 positioned above the supporting table 7 and connected, by a pneumatic cylinder 11 and two rod-shaped guides 12, to a frame 13 fixed to the base 3 of the machine 1.

As shown in Figures 1, 3 and 4, the cutting head 10 comprises a plate 14 for connection to the cylinder 11 and to the rod-shaped guides 12 as well as a mould 15 fixed to the plate 14, designed to produce the portions 2 of cheese on the disks 5.

The mould 15 is delimited by three lateral walls, respectively a first wall 16, a second wall 17 and a third wall 18, each having a substantially sharp lower end, opposite the supporting table 7.

The three walls 16, 17, 18 are connected to each other in such a way as to form a triangular mould 15 inner zone 19.

The mould 15 inner zone 19 is in turn divided into a plurality of triangular sectors 20 by first, second and third blades 21, 22, 23, arranged in a criss-cross pattern relative to each other.

The first blades 21 are parallel with the first wall 16 of the mould 15 and have their ends fixed to the second and third walls 17, 18. The second blades 22 are parallel with the second wall 17 of the mould 15 and have their ends fixed to the first and third walls 16, 18. The third blades 23 are parallel with the third wall 18 of the mould 15 and have their ends fixed to the first and second walls 16, 17.

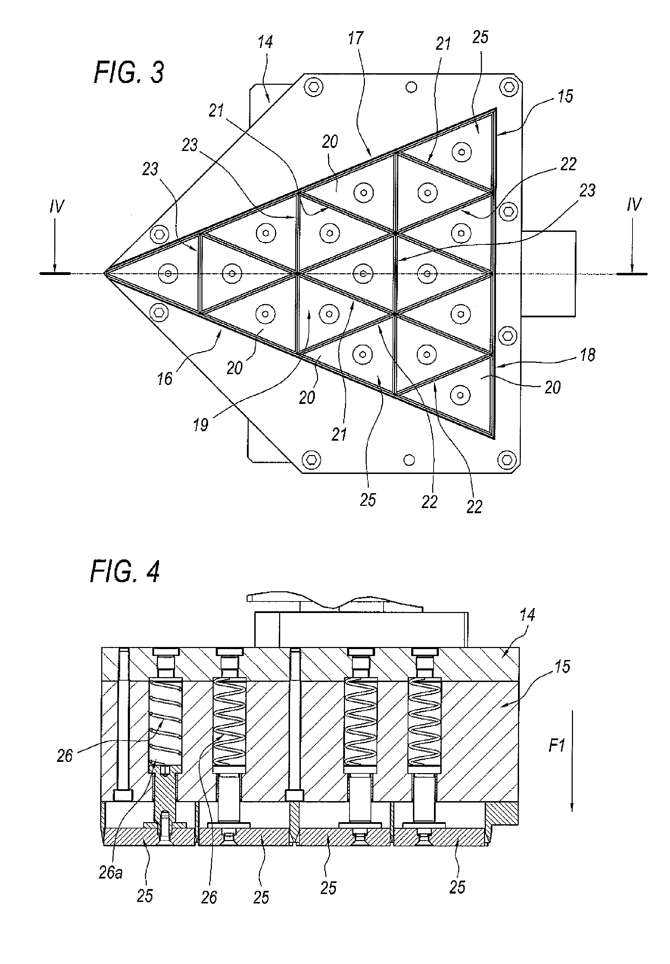

As illustrated in Figures 3 and 4, in each triangular sector 20 there are respective elastic ejector means 24 designed to eject the portions 2 of cheese from the mould 15.

The ejector means 24 comprise a triangular pusher element 25 slidably inserted in the triangular sectors 20, having an area approximately the same as the inner area of the triangular sectors 20.

As shown in Figure 4, the triangular pusher 25 is fixed to a first end 26a of a compression spring 26. The second end 26b of the spring 26 is fixed to the plate 14.

In this way, the spring 26 tends to push the triangular pusher 25 in the direction indicated by the arrow F1 in Figure 4, that is to say, out of the relative triangular sector 20.

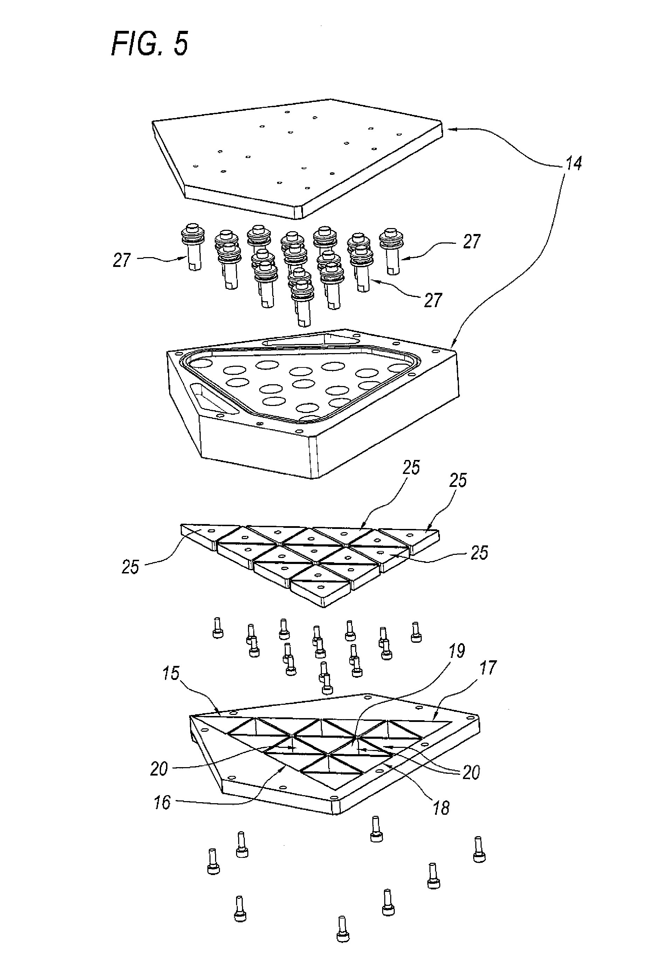

In a second embodiment, illustrated in Figure 5, the ejector means 24 are pneumatic and each triangular element 25 is connected to a respective pneumatic cylinder 27.

As shown in Figures 1 and 6, the cutting head 10 can move vertically, driven by the hydraulic cylinder 11, along the rod-shaped guides 12, between a raised non-operating position in which the head 10 is disengaged from the disk 5 of cheese positioned on the table 7, and a lowered operating position in which the head 10 is engaged with the relative disk 5.

As shown in Figure 3, the angle at the vertex formed by the first and second walls 16, 17 of the mould 15 is 45°.

The machine 1 also comprises a bar 28, positioned in contact with the surface of the supporting table 7 and connected to a horizontal guide 29 adjacent to the supporting table 7.

The bar 28 can move, driven by motor means not illustrated, along the plane identified by the supporting table 7 and its function is to remove from the supporting table 7 the portions 2 of cheese present on said table after a disk 5 has been cut.

The portions 2 formed, having a triangular shape and 5 - 8 millimetres thick, are moved by the bar 28 towards a chute 100 and from there to a conveyor belt 101 which conveys them toward a packaging station.

To facilitate this operation, the supporting table 7 comprises the above-mentioned holes 8 through which compressed air is blow, which prevents the portions 2 of cheese from sticking to the table 7.

The cutting head 10 also comprises a plate 30 surrounding the plate and the mould, connected by rod-shaped guides 31, not shown in Figure 1, to a pneumatic cylinder 32: therefore the plate can move vertically along the guides 31 driven by the cylinder 32.

Connected to the plate 30 there are three rod-shaped elements 33 projecting towards the supporting table 7 and able to rotate about respective axes A', A'', A'''.

The three rod-shaped elements 33 are connected by a belt 34 and a connecting rod 35 to a pneumatic cylinder 36 in such a way that they can rotate simultaneously when driven by the cylinder 36.

Fixed on the free end 33a of each of the three rod-shaped elements 33 there is an element 37 for pushing the disk 5 of cheese, having an inner sensor designed to detect contact between the element 37 and a disk 5.

The cylinder 36 is activated in response to a command from the sensors inside the elements 37 and causes the elements 33 to rotate.

When the three rod-shaped elements 33 rotate towards the centre of the supporting table 7, the pusher elements 37 also push the disk 5 positioned on the table 7 towards the centre in such a way that when the disk 5 is resting on the table 7 the axis Y of the disk 5 and the axis Z of the table 7 coincide.

In that way the disk 5 is centred relative to the table 7.

The cylinder 36, the belt 34, the rod-shaped elements 33, the pusher elements 37, form means 38 for centring the disks 5 of cheese for the machine 1.

According to another embodiment, not illustrated, centring may be performed using a laser guide which identifies the precise position of the disk on the table.

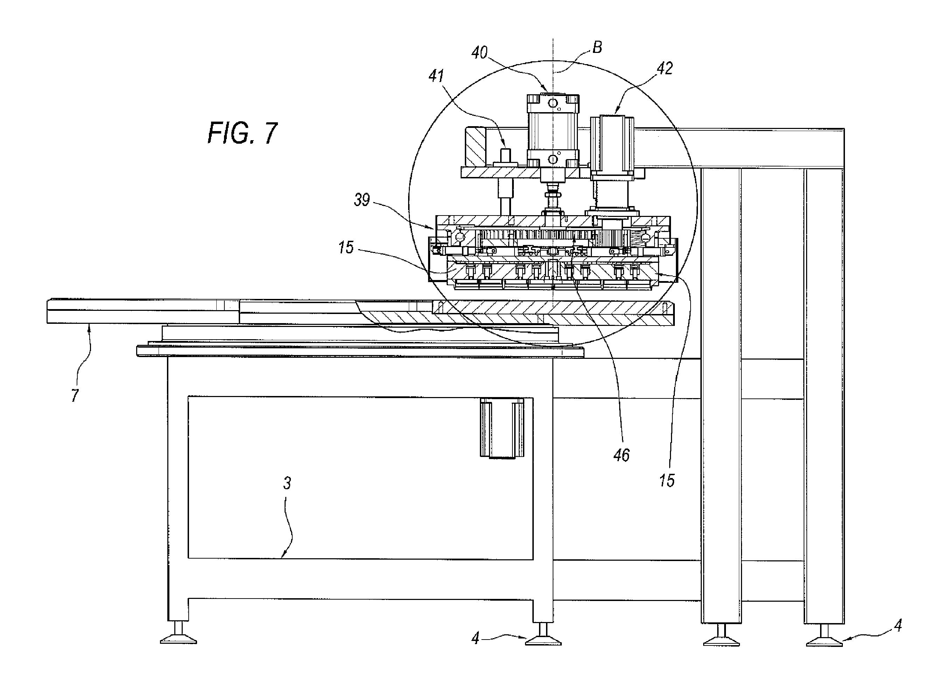

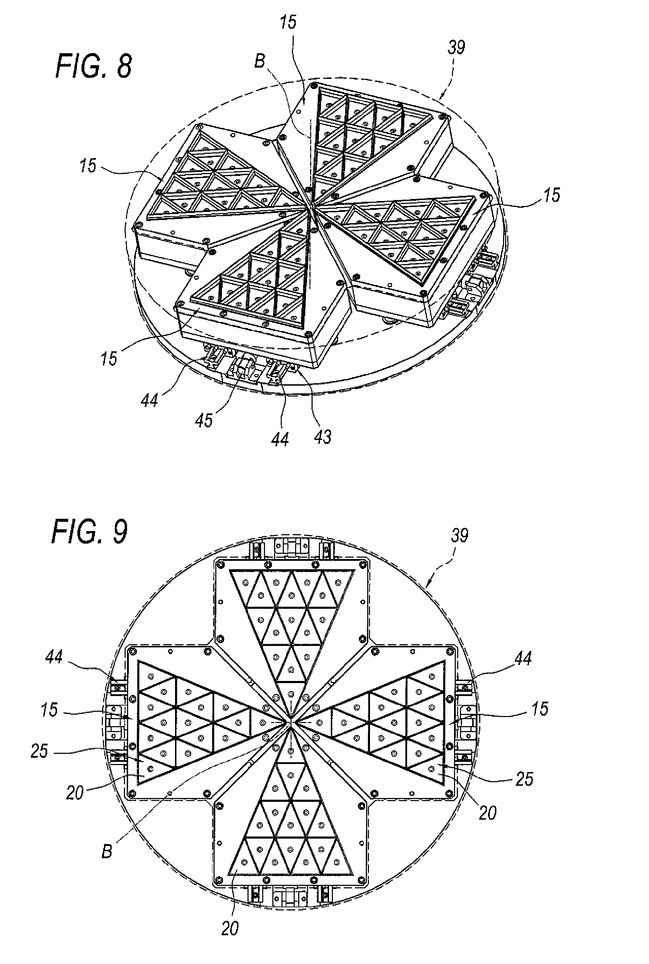

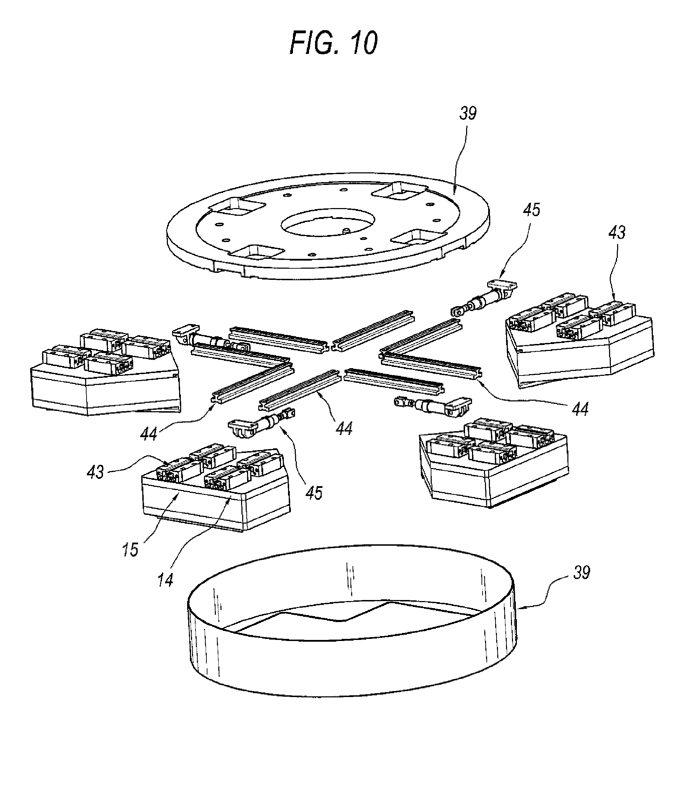

Figures 7 to 11 illustrate a second embodiment of the machine according to the present invention.

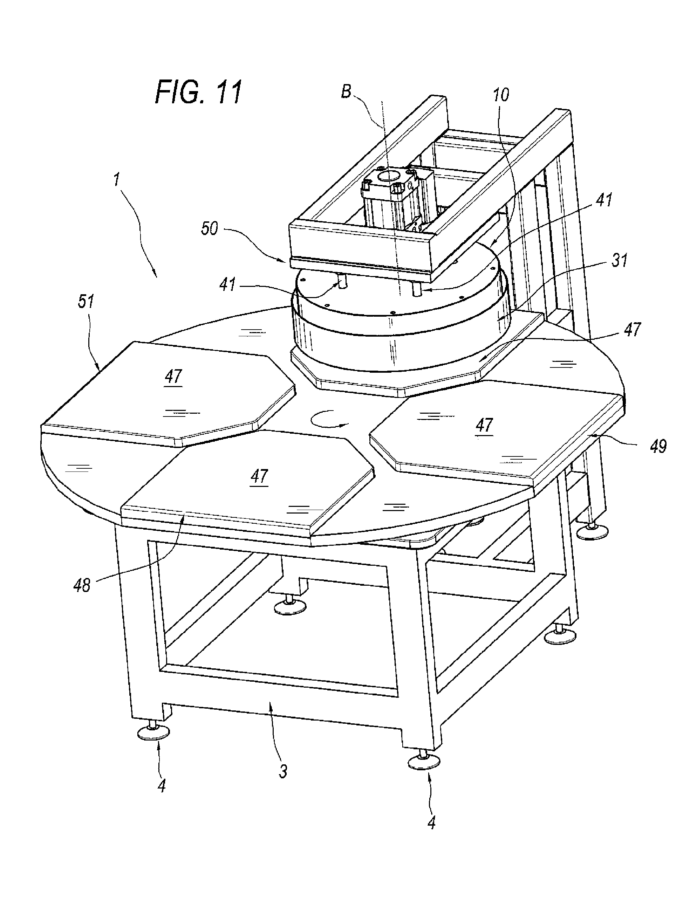

As shown in Figures 7 and 11, in said embodiment the cutting head 10 comprises a cylindrical support 39, connected to a pneumatic cylinder 40 by four rod-shaped guides 41 and to a "brushless" type electric motor 42 by a mechanical connection inside the cylindrical support 39.

The cylindrical support 39 supports four triangular moulds 15 positioned in such a way that their vertices are adjacent.

Each of the four moulds 15 is connected to the cylindrical support 39 by four slide guides 43 designed to move along two tracks 44 fixed to the cylindrical support 39 and driven by a cylinder - piston unit 45. The cylinder of the unit 45 is fixed to the cylindrical support 39 and the free end of the piston of the unit 45 is fixed to the mould 15.

The moulds 15 are arranged crosswise to each other and are equidistant from each other, separated by an angle of 45°.

The four moulds 15 can move horizontally, controlled by the respective cylinder - piston units 45, when they are in the above-mentioned lowered position engaging with the disk 5, between a first position in which the vertex of each mould 15 substantially coincides with the centre of the disk 5 of cheese positioned on the table 7 and a second position in which the vertex of each mould 15 is distanced from the centre of the disk 5.

The cutting head 10 can move vertically along the rod-shaped guides 41 driven by the pneumatic cylinder 40 and can rotate about a predetermined axis B driven by the brushless motor 42 which, as shown in Figure 7, engages with a toothed wheel coupling 46 inside the cylindrical support 39.

Moreover, in accordance with said embodiment, the circular supporting table 7 comprises four seats 47, each designed to support one after another one of the disks 5 of cheese.

The machine also operates between a loading station 48 in which a disk 5 of cheese is positioned on a first seat 47, a station 49 for centring the disk 5 relative to the first seat 47, a station 50 for cutting the disk 5 into a plurality of portions 2 of cheese, a station 51 for transferring the portions 2 of cheese from the first seat 47 to a packaging station adjacent to the machine 1.

In practice, with that configuration two or more disks 5 can be processed simultaneously.

In a second embodiment the cutting head 10 comprises, in place of the triangular moulds 15, a first set of ultrasonic cutting elements and a second set of ultrasonic cutting elements, designed to produce the portions 2 of cheese.

The two sets of ultrasonic cutting elements are arranged crosswise to each other and the cutting head can rotate about the axis B.

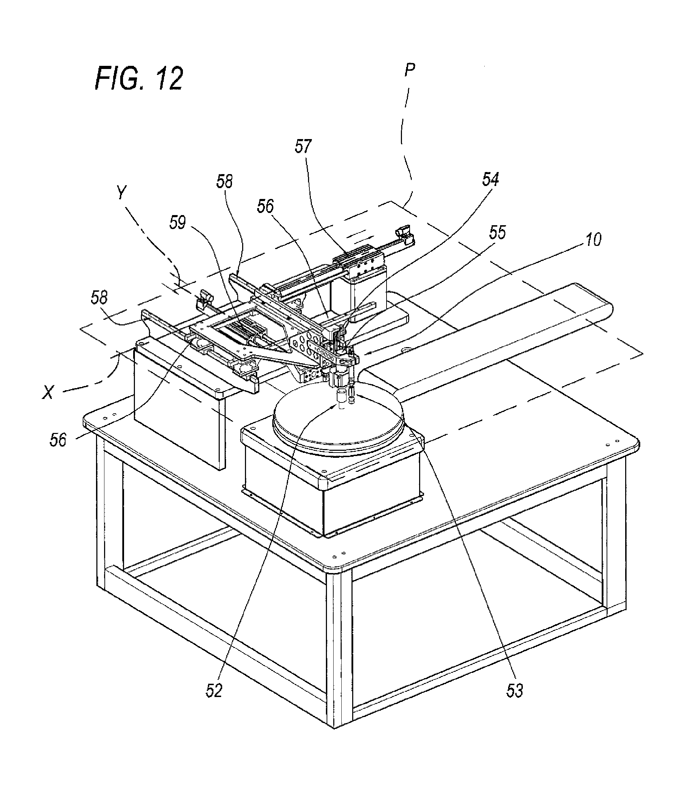

Figure 12 illustrates a third embodiment of the machine in accordance with the present invention.

According to said third embodiment, the cutting head 10 comprises an ultrasonic cutting element 52 and an element 53 for picking up the cut foodstuff, the pick up element being positioned alongside the ultrasonic cutting element 52.

The foodstuff pick up element 53 is a suction cup.

As shown in Figure 12, the cutting head 10 can slide vertically along first guide means 54 driven by a pneumatic cylinder 55.

The cutting head 10 can also move along a horizontal plane P identified by an axis X and by an axis Y.

The movement along the axis X is performed by means of the sliding connection between the cutting head 10 and second straight guide means 56 angled according to the axis X.

The straight guide means 56 comprise two substantially straight tracks 56.

The cutting head 10 can move along the straight tracks driven by a first linear electric motor 57.

The movement along the axis Y is performed by means of the sliding connection between the cutting head 10 and third straight guide means 58, the latter at right angles to the second guide means 56 and angled according to the axis Y.

The third guide means comprise respective substantially straight tracks 58.

The cutting head 10 can move along the straight guide tracks 58 driven by a second linear electric motor 59.

The machine disclosed can also be used to produce portions of cheese which are not just triangular, but which have any shape and always have a minimum thickness.

Machine 1 operation will now be described with reference to the machine configuration illustrated in Figures 6 to 10, although what is said can immediately be extended to the other embodiments described.

The feed means place a first disk 5 of cheese, produced by the cutting means, at the loading station 48, on the first seat 47 of the supporting table 7.

The supporting table 7 rotates through 90° and brings the first seat 47 to the centring station 49. In said station the disk 5 of cheese is centred in such a way that the centre of the disk 5 and the centre of the first seat 47 coincide.

A second disk 5 is simultaneously loaded on the second seat 47.

The table 7 rotates through another 90° bringing the first seat 47 to the cutting station 50 and the second seat 47 to the centring station 49 and a third disk is loaded on the third seat 47.

At this point the cutting head 10 comprising the four moulds 15 moves to its lowered position in which it engages with the disk 5 and makes a first cut, cutting the disk 5 into four triangles, in turn divided into sixteen portions 2 of cheese having a triangular shape corresponding to the triangular sectors 20 in each mould 15.

Then the moulds 15 which are positioned with the relative vertices coinciding with the centre of the disk 5 move horizontally along the tracks 44, driven by the cylinder - piston units 45, so as to reach the second position in which the vertices of the moulds 15 are back relative to the centre of the disk 5.

In this way, the portions 2 of cheese formed with the first cut are distanced from the part of the disk 5 still to be cut.

From the lowered position the cutting head 10 moves towards the raised position and the pushing action towards the table 7 by the ejector means 24 releases the triangular portions 2 of cheese from the moulds 15.

Once the cutting head 10 has been raised, the moulds 15 move horizontally from the second position back to the first position, and the cutting head 10 simultaneously turns through 45°.

Then the cutting head 10 is lowered and the four moulds 15 make the second cut, thus completing the entire disk 5.

The cutting head 10 is raised and the supporting table 7 rotates through another 90°, bringing the first seat 47 to the station 51 for transferring the portions 2 of cheese to the packaging station.

The production cycle is repeated, performing the steps just described for each of the four seats 47 of the supporting table 7.

The invention brings important advantages.

It allows the production of small pieces of cheese, significantly limiting the amount of cheese thrown away due to the way in which the whole cheese is cut.

This is thanks to the fact that portions of cheese are produced starting with circular disks cut according to a plane perpendicular to the axis of the whole cheese. Moreover, the reduced thickness of the small triangles of cheese produced makes them easily usable and chewable by all consumers, including the elderly and children.

The thickness of the small triangles is so reduced that there is hardly any need to chew them.

Another fundamental feature of the machine is the horizontal motion of the moulds along the supporting table plane.

Said motion separates the small triangles already formed from the part of the disk still to be cut.

This further reduces the cheese waste coefficient, since it eliminates the possibility that with the second cut the moulds will also make contact with the small triangles already formed, causing them to break up.

## Claims

1. A machine for producing portions (2) of foodstuff starting with pieces (5) of foodstuff which can be obtained from a whole foodstuff (6), **characterised in that** it comprises a table (7) for supporting at least one piece (5), means for feeding pieces (5) one after another to the table (7) and at least one cutting head (10) which can move at least vertically between a raised non-operating position in which the head (10) is disengaged from the piece (5) and a lowered operating position in which the head (10) engages with the piece (5), in such a way as to produce a plurality of portions (2) of foodstuff from each piece (5).

2. The machine according to claim 1, **characterised in that** the cutting head (10) comprises at least one mould (15) designed to produce a plurality of portions (2) of foodstuff on each of the pieces (5).

3. The machine according to claim 1, **characterised in that** the whole foodstuff (6) is substantially cylindrical with an axis (X) and each of the pieces is a disk (5) having an axis (Y) coinciding with the axis (X) of the cylindrical whole foodstuff (6) and also being **characterised in that** the cutting head (10) comprises at least one mould (15) designed to produce a plurality of portions (2) of foodstuff on the disk (5).

4. The machine according to claim 2 or 3, **characterised in that** the mould (15) is delimited by three walls, respectively a first, a second and a third wall (16, 17, 18), forming a zone (19) inside the mould (15) which has a substantially triangular shape.

5. The machine according to claim 4, **characterised in that** the zone (19) inside the mould (15) is divided into a plurality of triangular sectors (20) by first blades (21) parallel with the first wall (16), second blades (22) parallel with the second wall (17) and third blades (23) parallel with the third wall (18).

6. The machine according to any of the claims from 1 to 5, **characterised in that** the cutting head (10) can move horizontally when it is in the lowered position in which it engages with the pieces (5) of foodstuff.

7. The machine according to any of the claims from 3 to 6, **characterised in that** the mould (15) can move horizontally when it is in the lowered position in which it engages with the disk (5), between a first position in which the vertex of the mould (15) substantially coincides with the centre of the disk (5) and a second position in which the vertex of the mould (15) is distanced from the centre of the disk (5).

8. The machine according to any of the claims from 3 to 7, **characterised in that** the angle at the vertex of the mould (15) is 45°.

9. The machine according to any of the claims from 1 to 7, **characterised in that** the cutting head (10) comprises four triangular moulds (15) having adjacent vertices, arranged crosswise to each other and equidistant from each other, being separated by an angle of 45°.

10. The machine according to claims 1 to 9, **characterised in that** the table (7) for supporting the disk (5) is circular and can rotate about a predetermined axis (Z).

11. The machine according to claim 10, **characterised in that** when the disk (5) is resting on the table the disk (5) axis (Y) and the table (7) axis (Z) coincide.

12. The machine according to any of the claims from 1 to 10, **characterised in that** the cutting head (10) can rotate about a predetermined axis (B).

13. The machine according to any of the claims from 2 to 12, **characterised in that** the mould (15) comprises ejector means (24) designed to eject the portions (2) of foodstuff from the mould (15).

14. The machine according to any of the claims from 5 to 12, **characterised in that** it comprises respective ejector means (24) for each triangular sector (20) inside the mould (15).

15. The machine according to any of the claims from 2 to 14, **characterised in that** the ejector means (24) are of the pneumatic type.

16. The machine according to any of the claims from 2 to 14, **characterised in that** the ejector means (24) are of the elastic type.

17. The machine according to claim 1, **characterised in that** the cutting head (10) comprises at least one ultrasonic cutting element (54) designed to cut a part of the disk (5) so as to obtain a predetermined profile.

18. The machine according to claim 17, **characterised in that** the ultrasonic element (52) is mounted on a first vertical guide (54) and can move vertically, and **in that** the cutting head (10) is slidably mounted on a second horizontal guide (56), in such a way that it can move along a horizontal axis (X) and on a third horizontal guide (58), at a right angle to the second guide (56), in such a way that it can move along an axis (Y), so that the cutting head (10) is free to move along a horizontal plane (P).

19. The machine according to claim 17 or 18, **characterised in that** the cutting head (10) comprises a first set of ultrasonic cutting elements (54) and a second set of ultrasonic cutting elements (54), said first and second sets being arranged crosswise to each other.

20. The machine according to any of the claims from 1 to 19, **characterised in that** the cutting head comprises centring means (38) designed to position the disk (5) relative to the table (7) in such a way that the axis (Y) and the axis (B) coincide.

21. The machine according to claim 2 or 3, **characterised in that** the circular supporting table (7) can rotate intermittently and comprises four seats (47), each designed to support one after another one of the pieces (5) of foodstuff.

22. The machine according to claim 21, **characterised in that** it comprises a loading station (48) in which a disk (5) of foodstuff is positioned on a first of the seats (47), a station (49) for centring the disk (5) relative to the first seat (47), a station (50) for cutting the disk (5) into a plurality of portions (2) of foodstuff, a station (51) for transferring the portions (2) of foodstuff from the first seat (47) to a packaging station adjacent to the machine (1).

23. The machine according to any of the claims from 1 to 22, **characterised in that** the thickness of the piece (5) of foodstuff and the portions (2) of foodstuff is approximately less than or equal to eight millimetres.

24. The machine according to any of the claims from 1 to 23, **characterised in that** the whole foodstuff (6) is a whole cheese, the pieces (5) are pieces of cheese and the portions (2) are portions of cheese.
